# EUROPÄISCHE PATENTSCHRIFT

(11) **EP 0 855 695 B1**
(45) Veröffentlichungstag und Bekanntmachung des Hinweises auf die Patenterteilung: **02.01.2002**
(21) Anmeldenummer: 97122233.6
(22) Anmeldetag: 17.12.1997
(51) Int. Cl.: F16C 11/00, E05F 5/00, G10C 3/02

(54) **Tastenklappe für Tasteninstrumente**
Fallboard for keyboardinstrument
Couvercle pour instruments à clavier

(30) Priorität: 18.12.1996 DE 29621963 U
(43) Veröffentlichungstag der Anmeldung: 29.07.1998
(73) Patentinhaber: ED. SEILER, PIANOFORTEFABRIK GMBH & CO. KG, 97318 Kitzingen (DE)
(72) Erfinder: Seiler, Steffen, 97318 Kitzingen (DE); Donnert, Horst, 97228 Rottendorf (DE)
(74) Vertreter: Götz, Georg, Dipl.-Ing.

(56) Entgegenhaltungen:
- EP-A- 0 289 954
- US-A- 5 056 396
- US-A- 5 635 655

## Beschreibung

Die Erfindung richtet sich auf ein gehäuseseitiges Teil eines Scharnierelements für eine Tastenklappe für Tasteninstrumente, insbesondere für Flügel, mit einem die Klappenbewegung dämpfenden Element, gemäß erstem Teil/Oberbegtiff des Anspruchs 1 (US-A-5 056 396).

Um die Klaviatur eines Tastenmusikinstruments vor Staub zu schützen, ist üblicherweise eine Tastenklappe vorhanden, die im unbenutzten Zustand die Klaviatur abdeckt und zum Spielen um eine zu der Tastenreihe parallele Achse in eine etwa vertikale Position hochgeschwenkt werden kann. In dieser geöffneten Position befindet sich die Klappe jedoch in einem äußerst labilen Zustand. Sie fällt zwar meist nicht von selbst herab, es genügt jedoch bereits eine geringe, unachtsame Berührung, um die Klappe aus dem Gleichgewicht zu bringen, so daß diese aufgrund ihres nicht unerheblichen Gewichts nach unten fällt und dabei die Finger des Pianisten einklemmt und möglicherweise gar verletzt.

Aus diesem Grund kann gemäß DE-U- 295 20 529 eine Dämpfervorrichtung für die Klappbewegung einer Tastaturklappe vorgesehen sein, damit diese beim Zuschwenken nicht mit der gesamten Wucht ihres Gewichts herabfällt, sondern gebremst wird und dadurch mit etwa konstanter, langsamer Geschwindigkeit herabschwenkt. Zu diesem Zweck ist im Bereich eines stirnseitigen Scharniers an der verschwenkbaren Aufnahme für die Tastenklappe ein Winkeleisen mit einem bezüglich der Schwenkachse etwa radialen und einem sich daran anschließenden, tangentialen Schenkel angeordnet. An dem freien Ende des tangentialen Schenkels ist die Kolbenstange eines geschlossenen, hydraulischen Arbeitszylinders angelenkt, der mit seinem rückwärtigen Ende über ein weiteres Schwenklager mit einer Befestigungsplatte zur Festlegung an dem Instrumentengehäuse verbunden ist Der Arbeitszylinder ist in seiner Länge durch ein Arbeitsmedium gebremst verstellbar und dämpft dadurch die Klappenbewegung ab. Zwar kann mit dieser Anordnung ein plötzliches Herabfallen der Tastenklappe vermieden werden; dennoch tritt hier das Problem auf, daß der Arbeitszylinder in seinen beiden Bewegungsrichtungen gleichermaßen dämpfend wirkt, so daß auch das Hochschwenken der Tastenklappe gebremst wird. Deshalb muß die Tastenklappe vor dem Spielen langsam sowie unter hoher Kraftanstrengung hochgeschwenkt werden, was sich als äußerst mühselig erweist Darüber hinaus ist die aus dem obigen Gebrauchsmuster vorbekannte Konstruktion relativ aufwendig und beansprucht wegen des Arbeitszylinders ein großes Volumen, was bei manchen Instrumenten ungünstig ist.

Aus US-A-5 635 655 bzw. WO-A-9 520 211 ist ein Tastenklappen-Öldämpfer bekannt, der auf der Basis eines Flüssigkeitsventils arbeitet. Durch die dort beschriebenen Ventilmechanismen wird erreicht, dass beim Öffnen der Tastenklappe Viskoseflüssigkeit in einer Kammer frei bzw. mit weniger Widerstand fließt bzw. bewegt werden kann als beim Schließen der Tastenklappe.

In EP-A-0 289 954 wird ein Dämpfungsmechanismus für eine Tastenklappe beschrieben, der auf den Einsatz einer um die Schamierachse gewickelten Spiralfeder beruht. Eines von deren Enden ist mit einem drehbaren hohlzylindrischen Gehäuse fest verbunden. Dadurch kommt es bei einer Schließbewegung zu einem Anpressen der Spiralfeder auf den Schaft der Scharnierachse, wodurch mit zunehmender Zuklappbewegung die Reibung erhöht wird. Beim Aufklappen wird die Spiralfeder umgekehrt radial aufgeweitet. Zur Erhöhung der Reibung zwischen der Gehäuseinnenseite und dem Scharnierachsen-Schaft werden noch in den Ringspalt zwischen beiden Teilen hochviskose Stoffe eingeführt.

Aus US-A-5 056 396 ist ein gattungsgemäßes, gehäuseseitiges Teil eines Schamierelements bekannt. Die dabei beschriebene Öffnungs-/Schließvorrichtung für die Klavier-Tastenklappe arbeitet mit einem Öldämpfer, der eine mit Bremsflüssigkeit gefüllte Ölkammer aufweist. An eine Welle des Öldämpfers entsprechend der Tasten-Schamierachse ist ein Hebelelement mit einem Flüssigkeitsventil angelenkt. Bei Klappenöffnungsbewegung wird das Hebelelement in der Ölkammer bewegt. Dabei kann Öl frei durch eine Durchgangsbohrung im Hebelelement fließen, ohne dass für den Benutzer ein nennenswerter Flüssigkeitswiderstand bei Klappenöffnung entsteht. Zum Schließen wird das Hebelelement in die entgegengesetzte Richtung innerhalb der Ölkammer geschwenkt. Dabei wird von dem Ventil die genannte Durchgangsbohrung geschlossen. Für den Durchfluß stehen nur noch kleine Öffnungen in einer Seitenwandung zur Verfügung.

Demgegenüber ist es Aufgabe der Erfindung, bei Tastenklappen-Scharnieren die Konstruktion des gehäuseseitigen Teils möglichst einfach und platzsparend zu gestalten. Zur Lösung wird das im Anspruch 1 angegebene, gehäuseseitige Teil eines Schamierelements für die Tastenklappe vorgeschlagen. Zweckmäßige, vorteilhafte Ausgestaltungen dieser Erfindung ergeben sich aus den abhängigen Ansprüchen.

Erfindungs gemäß ist zusätzlich zu dem dämpfenden Element ein Freilaufelement vorgesehen, welches eine ungedämpfte Aufklappbewegung zuläßt. Derartige Freilaufelemente bewirken in der einen Bewegungsrichtung eine starre Kopplung zwischen den beiden Anschlußelementen des Freilaufelements, während in der anderen Drehrichtung die Kopplung vollständig aufgehoben ist. Aufgrund dieser Funktion ist es möglich, die bremsende Wirkung eines dämpfenden Elements für die Öffnungsbewegung aufzuheben, so daß hierfür keine erhöhte Kraft notwendig ist.

Die Erfindung sieht weiterhin vor, daß das Freilaufelement in der Verlängerung der Schwenkachse der Tastenklappe angeordnet ist. Hierdurch wird ein zusätzliches Getriebe eingespart, so daß sich eine unauffällige Optik ergibt Außerdem ist die Konstruktion sehr einfach und dadurch wenig störungsanfällig.

Es liegt im Rahmen einer Erfindungs ausbildung, daß das Dämpfungselement einen unbegrenzten Drehwinkel zuläßt. Bedingt durch das Freilaufelement wird bei der Öffnungsbewegung der Tastenklappe das Dämpfungselement nicht betätigt und verbleibt daher in seiner Ausgangsposition. Beim Schließen der Klappe wird ein Teil des Dämpfungselements jedoch mitgenommen, wobei dessen Bremswirkung sich dämpfend auf die Tastenklappe überträgt. Das Dämpfungselement führt demnach beständig und ausschließlich eine Drehung in derselben Richtung aus; eine rückstellende Bewegung findet nicht statt. Deshalb ist es im Rahmen dieser Ausbildung unbedingt erforderlich, ein derartiges Dämpfungselement zu verwenden, welches einen unbegrenzten Drehwinkel zuläßt.

Hierfür eignet sich insbesondere ein Dämpfungselement, das erfindungsgemäß mit einem mit einem Fluid gefüllten Gehäuse gebildet ist, in welchem ein demgegenüber verdrehbares Teil durch Flüssigkeitsreibung gebremst wird. Anders als bei einem hydraulischen Zylinder, dessen lineare Verschiebungsbewegung naturgemäß begrenzt ist, wird die Relativbewegung bei dem Dämpfungselement direkt durch ein abgebremstes Drehteil bedämpft. Hierdurch wird außerdem ein Hydraulikzylinder völlig überflüssig, was die Konstruktion weiter vereinfacht Die Flüssigkeitsreibung kann insbesondere dadurch hervorgerufen werden, daß das in dem Gehäuse angeordnete, verdrehbare Teil die Form einer Walze oder eines Schaufelrads hat, dessen Mantel bzw. Schaufeln bis nahe an die Gehäuseinnenseite heranreichen, wobei ein zähflüssiges Bremsfluid eingefüllt ist, bspw. Silikon, das an der inneren Mantelfläche des Gehäuses fest haftet und somit zumindest teilweise durch den von dem Mantel oder den Schaufeln gebildeten Schlitz hindurchtreten muß.

Eine Weiterbildung der Erfindung, welche sowohl alternativ als auch kumulativ zu der oben beschriebenen Fluiddämpfung realisiert werden kann, zeichnet sich durch ein oder mehrere, elastische Elemente aus, das/die sich zwischen dem Gehäuse des Dämpfungselements und einem demgegenüber verdrehbaren Teil befindet/befinden und durch Reibung eine Bremswirkung erzeugt/erzeugen. Derartige, elastische Elemente bieten vor allem die Möglichkeit, die Bremswirkung durch Veränderung der Anpreßkraft zu verändern. Diese zusätzliche Eigenschaft erlaubt es, ein standardisiertes Dämpfungselement für eine Vielzahl von unterschiedlichen Tastenklappen zu verwenden, sowohl bei leichteren Tastenklappen mit Polyesterüberzug als auch bei schwereren, satinierten Tastenklappen.

Eine Vereinfachung der Konstruktion läßt sich erreichen, indem als elastisches Element ein Ring verwendet wird. Dieser kann bevorzugt in eine rundumlaufende Vertiefung des verdrehbaren Teils eingelegt und darin sowohl gehaltert als auch geführt sein. Der Grund einer derartigen, nutartigen Vertiefung bringt die radial nach außen wirkende Gegenkraft für die von der Gehäuseinnenseite auf den Ring ausgeübte Zentralkraft auf.

Indem der elastische Ring als O-Ring ausgestaltet ist, erhält er einen optimalen Querschnitt mit einer hohen Elastizität, da hierbei in den Kantenbereichen eines querschnittlich etwa quadratischen oder rechteckförmigen Schlitzes Verformungsbereiche zur Aufnahme von Auswölbungen des O-Ringes vorhanden sind. Auch wird hierdurch der Zusammenbau eines derartigen Dämpfungselements begünstigt, wobei das Gehäuse beim Aufschieben auf den O-Ring eine optimale Anlauffläche vorfindet.

Die Erfindung läßt sich dahingehend weiterbilden, daß die etwa lotrecht zu der Drehachse verlaufenden Berandungsflächen der den O-Ring aufnehmenden Vertiefung zur Erhöhung der auf diesen einwirkenden, radialen Anpreßkräfte aufeinander zu verstellbar ausgebildet sind. Indem diese seitlichen Berandungen der nutförmigen Vertiefung einander angenähert werden, ist der O-Ring bestrebt, dieser Quetschverformung in axialer Richtung durch eine Ausweichstreckung in radialer Richtung zu kompensieren. Bei dieser Tendenz zu einer radialen Streckung werden die auf die Gehäuseinnenseite und den Nutgrund wirkenden Anpreßkräfte erhöht, so daß auch die Reibungskräfte ansteigen. Hierdurch nimmt die Brems- bzw. Dämpfungwirkung zu.

Um die beiden Seiten der nutartigen Vertiefung einander anzunähern, kann eine Andruckscheibe verwendet werden, die eine Berandungsfläche der Vertiefung für den O-Ring bildet und an dem verdrehbaren Teil, welches die gegenüberliegende Berandungsfläche der Vertiefung bildet, unverdrehbar, jedoch in Richtung der Drehachse beweglich festgelegt ist. Zwar könnte die Andruckscheibe auch an dem Gehäuseteil unverdrehbar, jedoch in Richtung der Drehachse beweglich angeordnet sein, in einem solchen Fall ergäbe sich jedoch eine ungünstige Raumausnutzung für den Verstellmechanismus. Bei einer unverdrehbaren Festlegung an dem verdrehbaren Teil kann der Verstellmechanismus dagegen innerhalb des letzteren angeordnet sein.

Der Verstellmechanismus umfaßt bevorzugt eine zentrale Schraube, welche das drehbare Teil und/oder eine in demselben festgelegt Scheibe mit ihrem Schaft durchgreift und in eine mit Gewinde versehene Bohrung der Andruckscheibe eingeschraubt ist. Eine derartige Schraube dient dazu, die Andruckscheibe an das verdrehbare Teil heranzuziehen und dadurch die nutförmige Vertiefung querschnittlich zu verringern, um dadurch eine Quetschwirkung auf den eingelegten O-Ring auszuüben und dadurch dessen Reibungskraft zu erhöhen. Wird die Schraube dagegen in Löserichtung bewegt, ist aufgrund der Elastizität des O-Rings keinerlei zusätzliche Mechanik erforderlich, um die Andruckscheibe wieder in ihre Ausgangsposition zurückzufahren. Insofern ergibt sich eine höchst einfache Konstruktion, welche darüber hinaus eine stufenlose Verstellung der Dämpfungswirkung erlaubt. Der Schraubenkopf kann mit einer querschnittlich sechsekkigen Vertiefung zum Einstecken eines Imbus-Schlüssels versehen sein. Hierfür ist ein nach außen mündender Kanal innerhalb der Drehachse des Dämpfungselements vorgesehen. Um eine Feinjustierung auch bei in die Seitenwange eines Flügels oder Klaviers bereits eingebautem Dämpfungselement zu erlauben, sollte sich die Mündung dieses Kanals an derjenigen Stirnseite des Dämpfungselement befinden, an welchem die Tastenklappe lösbar angebaut wird.

Weitere Einzelheiten, Merkmale und Vorteile auf der Basis der Erfindung ergeben sich aus der nachfolgenden Beschreibung einer bevorzugten Ausführungsform der Erfindung sowie anhand der Zeichnung. Diese zeigt in:
- Fig. 1: eine perspektivische Darstellung einer nicht die Erfindung betreffenden Tastenklappe in nahezu vollständig hochgeschwenkter Position, teilweise abgebrochen,
- Fig.2: einen Schnitt durch die Fig. 1 entlang der Linie II - II,
- Fig. 3: den erfindungsgemäßen gehäuseseitigen Teil eines Scharnierelements,
- Fig. 4: das klappenseitige Pendant zu dem gehäuseseitigen Schamierteil aus Fig. 3,
- Fig. 5: einen Schnitt durch die Fig. 3 entlang der Linie V - V, sowie
- Fig.6: eine der Fig. 5 entsprechende Darstellung einer abweichenden Ausführungsform der Erfindung.

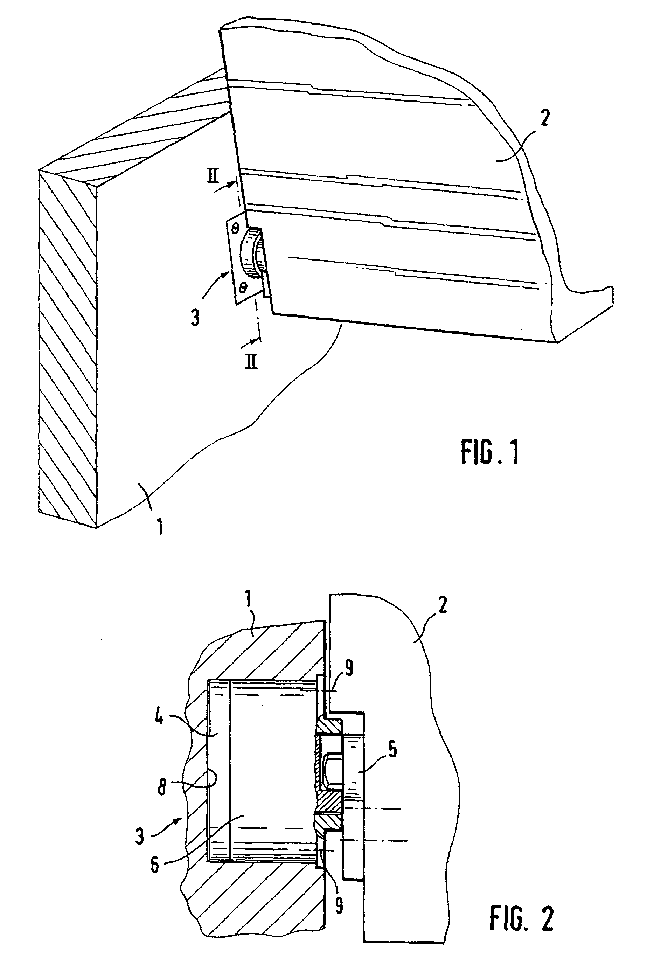

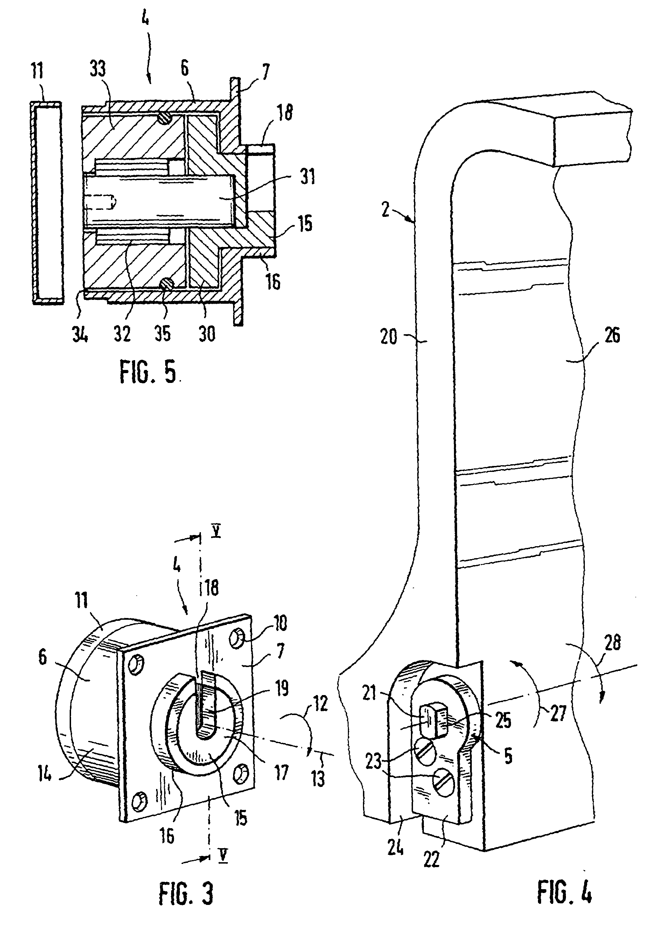

In Fig. 1 ist die links von der nicht dargestellten Klaviatur befindliche Seitenwand 1 eines Flügels zu sehen, an welcher eine Tastenklappe 2 mittels eines Scharnierelements 3 drehbar gelagert ist. Wie die Fig. 2 deutlicher zeigt, setzt sich das Scharnierelement 3 aus einem gehäuseseitigen Teil 4 und einem klappenfesten Teil 5 zusammen. Diese beiden Teile sind in den Fig. 3 bzw. 4 jeweils für sich genommen abgebildet.

Man erkennt in Fig. 3 das gehäusefeste Teil 4 des Scharnierelements welches ein zylindrisches Gehäuse 6 mit einem stirnseitigen Befestigungsflansch 7 aufweist. Der zylindrische Gehäuseteil 6 wird in eine entsprechend dimensionierte Sacklochbohrung 8 der Gehäusewand 1 eingesetzt, und mit vier Befestigungsschrauben 9, welche je eine Öffnung 10 des Befestigungsflanschs 7 durchgreifen, unverrückbar festgelegt. Der rückwärtige Teil 11 des Gehäuses 6 ist als lösbare Kappe 11 ausgebildet, über welche die Mechanik zugänglich ist.

Der mechanische Anschluß an die Tastenklappe 2 erfolgt mittels eines im Bereich der mit dem Flansch 7 versehenen Stirnseite des Scharnierelement-Teils 4 angeordneten Rotationskörper 30, der mit einem Fortsatz 15 durch eine zentrale Äusnehmung dieser Stirnseite hindurch zum Anschluß der Tastenklappe 2 zugänglich ist. Dieser Rotationskörper ist drehfest mit einer zu dem Gehäuse 6 konzentrischen Achse 31 gekoppelt, welche dieses bis zur gegenüberliegenden Stirnseite 11 durchsetzt. Neben dem Rotationsteil 30 ist auf der Welle 31 ein Walzenfreilauf 32 festgelegt, dessen Außenumfang einen Walzenkörper 33 trägt, der den Bereich zwischen dem Außenumfang des Walzenfreilaufs 32 und der Innenseite des Gehäuses 6 nahezu vollständig ausfüllt. Es verbleibt ausschließlich ein geringer Spalt 34 im Bereich der Innenseite des Gehäuses 6, welcher mit Silikon als Bremsfluid gefüllt ist. Ein O-Ring 35 dichtet den Bereich für die Bremsflüssigkeit zu der nach außen hin offenen Stirnseite des Gehäuses 6 hin ab.

Der Fortsatz 15 ist von einem an dem Befestigungsflansch 7 angeformten Kreisring 16 umgeben, der an seiner Vorderseite etwa bündig mit der Stirnseite 17 des Fortsatzes 15 abschließt, gegenüber dem Befestigungsflansch 5 jedoch um etwa 5 mm hervorsteht. Dieser Kreisring 16 wird an seiner Oberseite durch einen Schlitz 18 unterbrochen, welcher sich bei einer entsprechenden Relativstellung des Fortsatzes 15 in Form einer Nut 19 dieses Fortsatzes 15 bis zur Rotationsachse 13 des Gehäuses 6 fortsetzt. Dadurch wird es möglich, bei einer ent-sprechenden Drehstellung des Fortsatzes 15 einen an der Stirnseite 20 der Klappe 2 unverrückbar festgelgten Zapfen 21 durch den Schlitz 18 in die Nut 19 einzuschieben. Der Zapfen 21 ist an einer Metallplatte 22 angeformt, die mittels zweier Schrauben 23 in einer zur Klappenrückseite hin offenen Vertiefung 24 der Stirnseite 20 der Klappe 2 angeschraubt ist. Der Zapfen 21 hat einen länglichen Querschnitt mit zwei zueinander parallelen Seitenflächen 25, die etwa parallel zu der Klappengrundfläche 26 orientiert sind. Der Abstand dieser beiden Seitenflächen 25 entspricht etwa der Breite der Nut 19, so daß sich in dem eingeschobenen Zustand, wie er in Fig. 2 wiedergegeben ist, eine formschlüssige und dadurch verdrehfeste Kopplung zwischen dem Fortsatz 15 und der Klappe 2 ergibt

Wird die Klappe 2 nun in Richtung des Pfeils 27 nach oben geschwenkt, so ist die Kopplung des Freilaufelements 32 aufgehoben und ohne eine Relativverdrehung zwischen dem Fortsatz 15 und dem nicht dargestellten Innengehäuse des Dämpfungselements 6 kann die Klappe 2 mühelos geöffnet werden. Soll die Klappe 2 anschließend jedoch geschlossen 28 werden, so sperrt das Freilaufelement 32, so daß die einzige Möglichkeit einer Bewegung durch das Dämpfungselement 34 möglich gemacht wird. Dieses setzt der Bewegung 28 aufgrund des Silikon-Mediums jedoch eine hohe Bremskraft entgegen und die Klappe 2 kann demzufolge nur langsam bewegt werden. Ist die Klappe 2 um mehr als etwa 45° in Richtung des Pfeils 28 verschwenkt worden, so ist das von dem Klappengewicht hervorgerufene Drehmoment ausreichend, um ein selbsttätiges Schließen 28 sicherzustellen.

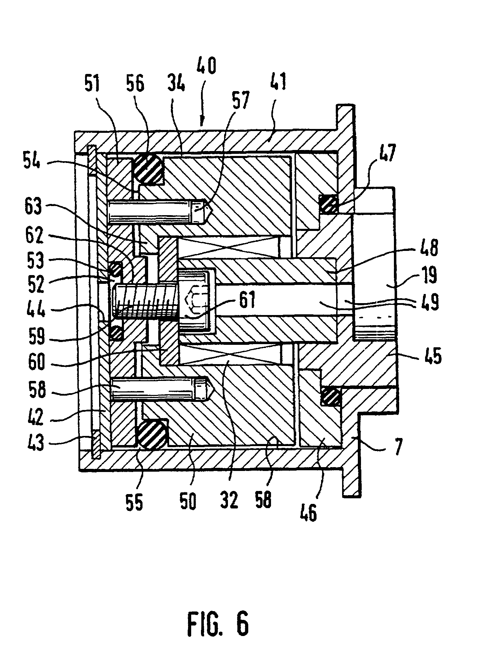

Die Ausführungsform gemäß Figur 6 unterscheidet sich von der vorangehend beschriebenen ausschließlich hinsichtlich des gehäusefesten Scharnierelement-Teils 40, während das klappenfeste Teil 5 unverändert beibehalten werden kann.

Das Gehäuse 41 des Scharnierelements 40 entspricht äußerlich völlig dem Gehäuseteil 6 der in Figur 5 dargestellten Ausführungsform, mit der Ausnahme, daß anstelle eines haubenartigen, rückwärtigen Teils 11 ein ebener Deckel 42 in das zylindrische Gehäuse eingeschoben und durch einen in eine nutförmige Vertiefung eingesprengten Ring 43 vor einem Herausrutschen bewahrt wird. Der Deckel 42 kann zum Hindurchtritt von Teilen der inneren Mechanik mit einer zentralen Ausnehmung 44 oder (nicht dargestellten) Ausbauchung versehen sein.

Der Rotationskörper 30 gemäß Figur 5 findet seine Entsprechung bei dem gehäuseseitigen Teil 40 gemäß Figur 6 in Form der beiden, jeweils etwa ringförmigen Teile 45, 46. Hierbei übernimmt das Teil 45 gleichzeitig die Funktion des Fortsatzes 15 und bildet eine nutartige Vertiefung 19 zur Aufnahme eines Zapfens 41 der Tastenklappe 2. Das Teil 46 ist von dem Teil 45 ausschließlich zum Zweck eines einfacheren Zusammenbaus getrennt. Außerdem ist die dem Befestigungsflansch 7 des Gehäuses 41 zugewandte Begrenzungsfläche zwischen den beiden Rotationskörpem 45, 46 querschnittlich erweitert und nimmt einen abdichtenden O-Ring 47 auf, der ähnlich wie der O-Ring 35 gemäß Figur 5 die Aufgabe hat, innerhalb des Scharnierelements 40 befindliche Bremsflüssigkeit vor einem Herausfließen zu bewahren. Das Rotationsteil 45 ist auf einer konzentrisch in dem Gehäuse 41 aufgenommenen Welle 48 unverrückbar festgelegt, und diese beiden Teile 45, 48 weisen je eine zentrale, miteinander fluchtende Bohrung 49 auf.

Wie bei der Anordnung gemäß Figur 5 ist auf der Welle 48 ein Walzenfreilauf 32 festgelegt, dessen Außenumfang einen Walzenkörper 50 trägt, der den Bereich zwischen dem Außenumfang des Walzenfreilaufs 32 und der Innenseite des Gehäuses 41 nahezu vollständig ausfüllt, bis auf einen geringen Spalt 34 im Bereich der Innenseite des Gehäuses 41, in welchem sich Silikon als Bremsfluid befindet. Silikon ist relativ zähflüssig und kann vor dem Zusammenbau auf die Mantelfläche des Walzenkörpers 50 aufgetragen werden. Nach dem Zusammenbau sowie während des Betriebs kann das Silikon aufgrund des Dichtungsrings 47 nicht im Bereich des Befestigungsflansch 7 aus dem Gehäuse 41 austreten.

Der Walzenkörper 50 erstreckt sich nicht bis zu der gegenüberliegenden Abschlußplatte 42, sondern dazwischen befindet sich eine Scheibe 51, die an ihrer dem Deckel 42 benachbarten Seite eine zentrale Ausnehmung 52 zur Aufnahme eines zweiten Dichtungsrings 53 aufweist, der ein Heraustreten des Silikons aus der zentralen Öffnung 44 in dem Deckel 42 unterbindet. Zwischen dem Walzenkörper 50 und der Andruckscheibe 51 befindet sich ein geringer Luftspalt 54, der sich im Bereich des Gehäuses 41 zu einer rundumlaufenden, querschnittlich bspw. rechteckförmigen Nut 55 erweitert. Diese Nut 55 nimmt einen elastischen Ring 56 auf, der vorzugsweise als O-Ring ausgebildet ist, und dessen Durchmesser etwa der Tiefe der Nut 55 sowie der maximalen Breite derselben entspricht. Zwei oder mehrere, exzentrische, vorzugsweise diametral angeordnete, miteinander fluchtende Bohrungen 57 in dem Walzenkörper einerseits und der Andrucksscheibe 51 andererseits nehmen je einen Bolzen 58 auf, so daß die Andruckscheibe 51 jegliche Drehbewegung des Walzenkörpers 50 nachvollzieht.

Wird die Andruckscheibe 51 unter Verringerung des Luftspalts 54 an den Walzenkörper 50 heranbewegt, so verringert sich der Querschnitt der rundumlaufenden Nut 55, und der O-Ring 56 wird gequetscht und legt sich dabei mit erhöhter Reibungskraft an der Innenseite 58 des Gehäuses 41 an. Hierdurch wird die Reibung des Dämpfungselements 40 erhöht, und die Schließbewegung der Tastenklappe unter der eigenen Gewichtskraft wird verlangsamt Um diese Schließgeschwindigkeit je nach dem Gewicht der Tastenklappe optimal einstellen zu können, ist ein Mechanismus zu Verstellung des Abstandes zwischen dem Walzenkörper 50 und der Andruckscheibe 51 vorgesehen. Dieser Mechanismus besteht in einer Maschinenschraube 59, die über eine Unterlegscheibe 60 mit ihrem Kopf 61 abgestützt ist und in eine Gewindebohrung 62 der Andruckscheibe 51 eingeschraubt wird. Da die Unterlegscheibe 60 auf eine im Bereich der deckelseitigen Stirnseite des Walzenkörpers 50 rundumlaufen, nach innen vorspringenden Schulter abgestützt ist, wird durch eine geeignete Verdrehbewegung der Schraube 61 die Andruckscheibe 51 an den Walzenkörper 50 herangezogen. Wird die Schraube 59 in umgekehrter Richtung betätig, so drückt der zunächst verformte O-Ring aufgrund seiner Elastizität die Andruckscheibe 51 wieder von dem Walzenkörper 50 weg in die ursprüngliche Position zurück.

Der Kopf 61 der Schraube 59 ist in einer querschnittlichen Erweiterung der Welle 48 aufgenommen und verfügt über eine querschnittlich sechseckförmige Einsenkung an ihrer Oberseite, in welche ein passender Imbusschlüssel durch die zentralen Öffnungen 49 hindurch eingesteckt werden kann, um die Schraube 59 um das gewünschte Maß zu verdrehen. Dies kann auch in eingebautem Zustand des Scharnierelement-Teils 40 geschehen, wozu ausschließlich die Tastenklappe 2 vorübergehend abgenommen werden muß. Insofern kann der Dämpfungsmechanismus nach einem beliebig langen Zeitraum exakt nachjustiert werden.

## Patentansprüche

1. Gehäuseseitiges Teil (4,40) eines Scharnierelements (3) für eine Tastenklappe (2) für Tasteninstrumente, insbesondere Flügel, welche Tastenklappe zu ihrem Auf- und Zuklappen versetzbar ist in Schwenkbewegungen (27,28) um eine parallel zur Tastenreihe verlaufenden Schamierachse (31;48), wobei das Schamierelement (3) mit dem mit einem Instrumentengehäuse fest verbindbaren beziehungsweise gehauseseitigen Teil (4) und einem daran anschließbaren, klappenfesten Teil (5) gebildet ist, und das gehäuseseitige Teil (4) innerhalb eines eigenen Schamiergehäuseteils (6;41) einen direkt drehfest an der Scharnierachse (31) angebrachten Rotationskörper (30;45,46) und ein Dämpfungselement für die Schwenkbewegungen (28) wenigstens zum Zuklappen der Tastenklappe (2) aufweist, wozu das Schamiergehäuse (6;41) zur Erzielung einer Flüssigketsreibung mit einem Bremsfluid gefüllt ist, **dadurch gekennzeichnet, dass** das Dämpfungselement einen zum Rotationskörper (30) koaxial angeordneten Walzenkörper (33;50) aufweist, der zu seiner Bremsung der Flüssigkeitsreibung durch das Bremsfluid innerhalb des Schamiergehäuseteils (6;41) ausgesetzt und mit der Schamierachse (31,48) über ein Freilaufelement (32) gekoppelt ist, welches gegenüber dem Walzenkörper (33) Bewegungen (27) der Scharnierachse (31,48) zum ungedämpften Aufklappen der Tastenklappe (2) zuläßt.

2. Gehäuseseitiges Teil (4,40) nach Anspruch 1, **dadurch gekennzeichnet, dass** das Dämpfungselement zwischen dem Scharniergehäuseteil (6;41) und dem darin befindlichen Walzenkörper (33;50) einen mit dem Bremsfluid gefüllten Spalt (34) aufweist, in dem der Walzenkörper (33;50) und gegebenenfalls der Rotationskörper (30;45,46) durch die Flüssigkeitsreibung gebremst sind, wobei ein unbegrenzter Drehwinkel zugelassen ist

3. Gehäuseseitiges Teil (4,40) nach Anspruch 1 oder 2, **gekennzeichnet durch** ein oder mehrere elastische Elemente (35;56) zwischen dem Schamiergehäuseteil (6;41) und dem darin befindlichen Walzenkörper (33;50) zur Erzeugung einer Bremswirkung **durch** Reibung.

4. Gehäuseseitiges Teil (4,40) nach Anspruch 2 und 3, **dadurch gekennzeichnet, dass** das elastische Element (35;56) als in dem Spalt (34) verlaufender Ring (35;56) oder O-Ring ausgebildet ist

5. Gehäuseseitiges Teil (4,40) nach Anspruch 4, **dadurch gekennzeichnet, dass** der elastische Ring (35;56) den Walzenkörper (33;50) umfassend angeordnet ist.

6. Gehäuseseitiges Teil (4,40) nach Anspruch 4 oder 5, **dadurch gekennzeichnet, dass** der elastische Ring (35;56) in einer rundumlaufenden Vertiefung oder Nut (55) des Walzenkörper (50) aufgenommen ist.

7. Gehäuseseitiges Teil (4,40) nach Anspruch 6, **dadurch gekennzeichnet, dass** die Vertiefung oder Nut (55) etwa lotrecht zur Schamierachse (31,48) verlaufende Berandungsflächen aufweist, die zur Erhöhung einer Anpreßkraft für den Ring (56) oder O-Ring aufeinander zu verstellbar sind.

8. Gehäuseseitiges Teil (4,40) nach Anspruch 7, **gekennzeichnet durch** eine Andruckscheibe (51), die eine Berandungsfläche der Vertiefung oder Nut (55) für den Ring (56) bildet und an dem Walzenkörper (50), welcher die gegenüberliegende Berandungsfläche der Vertiefung oder Nut (55) bildet, unverdrehbar, jedoch in Richtung der Schamierachse ((48) beweglich festgelegt ist.

9. Gehäuseseitiges Teil (4,40) nach Anspruch 8, **gekennzeichnet durch** eine zentrale Schraube (59), welche mit ihrem Schaft den Walzenkörper (50) und/oder eine in demselben festgelegte Scheibe (60) durchgreift und in eine mit Gewinde versehene Bohrung (62) der Andruckscheibe (51) eingeschraubt ist.

## Claims

1. Part (4, 40), associated with the housing, of a hinge element (3) for a keyboard lid (2) for keyboard instruments, in particular grand pianos, which lid is displaceable in order to be opened and closed in pivoting motions (27, 28) about a hinge shaft (31; 48) extending parallel to the keys, wherein the hinge element (3) is formed with the part (4) connectable rigidly to an instrument housing or fixable to the housing and with a part (5) connected to the keyboard lid and connectable to the part (4) associated with the housing, and the part (4) associated with the housing has, inside its own hinge housing part (6; 41) a rotary body (30; 45, 46) mounted direct non-rotatably on the hinge shaft (31) and a damping element for the pivoting motions (28) at least for closing of the lid (2), to which end the hinge housing (6; 41) is filled with a braking fluid in order to achieve fluid friction, **characterised in that** the damping element has a roller body (33; 50) disposed coaxial to the rotary body (30), which roller body is exposed for braking to the fluid friction by the braking fluid inside the hinge housing part (6; 41) and is coupled to the hinge shaft (31, 48) via a freewheel element (32), which with respect to the roller body (33) permits movements (27) of the hinge shaft (31, 48) for undamped opening of the lid (2).

2. Part (4, 40) associated with the housing according to claim 1, **characterised in that** the damping element has between the hinge housing part (6; 41) and the roller body (33; 50) located therein a gap (34) which is filled with the braking fluid and in which the roller body (33; 50) and optionally the rotary body (30; 45, 46) is braked by the fluid friction, an unlimited angle of rotation being permitted.

3. Part (4, 40) associated with the housing according to claim 1 or 2, **characterised by** one or more resilient elements (35; 36) between the hinge housing part (6; 41) and the roller body (33; 50) located therein for generating a braking effect by friction.

4. Part (4, 40) associated with the housing according to claim 2 and 3, **characterised in that** the resilient element (35; 56) is formed as a ring (35; 56) or O-ring extending in the gap (34).

5. Part (4, 40) associated with the housing according to claim 4, **characterised in that** the resilient ring (35; 56) is arranged so as to encompass the roller body (33; 50).

6. Part (4, 40) associated with the housing according to claim 4 or 5, **characterised in that** the resilient ring (35; 56) is received in a continuous recess or groove (55) in the roller body (50).

7. Part (4, 40) associated with the housing according to claim 6, **characterised in that** the recess or groove (55) has edging faces extending roughly vertically to the hinge shaft (31, 48), which are adjustable towards one another in order to increase a pressure force for the ring (56) or O-ring.

8. Part (4, 40) associated with the housing according to claim 7, **characterised by** a pressure disc (51), which forms an edging face of the recess or groove (55) for the ring (56) and on the roller body (50), which forms the opposite edging face of the recess or groove (55), and which is non-rotatable but movably fixed in the direction of the hinge shaft (48).

9. Part (4, 40) associated with the housing according to claim 8, **characterised by** a central screw (59), which penetrates with a shank the roller body (50) and/or a disc (60) formed in the same and is screwed into a threaded bore (32) of the pressure disc (51).

## Revendications

1. Pièce (4 ; 40), à montée côté bâti, d'un élément formant charnière (3) pour un couvercle de clavier (2) pour des instruments à touches, notamment des pianos, lequel couvercle de clavier, afin d'être relevé et rabattu, est déplaçable suivant des mouvements de pivotement (27, 28) autour d'un axe de charnière (31; 48) s'étendant parallèlement à la rangée de touches, l'élément formant charnière (3) étant alors constitué par la pièce (4) à montée côté bâti, c'est-à-dire pouvant être assemblée solidement à un bâti d'instrument, et par une pièce (5) solidaire du couvercle, pouvant être raccordée à la précédente, et la pièce (4) à montée côté bâti comportant, à l'intérieur d'une pièce formant enveloppe de charnière (6 ; 41), qui lui est propre, un corps de révolution (30 ; 45, 46) rapporté directement sur l'axe de charnière (31), en en étant solidaire en rotation, et un élément d'amortissement pour les mouvements de pivotement (28) au moins dans le sens du rabattement du couvercle de clavier (2), ce pour quoi l'enveloppe de charnière (6; 41) est remplie d'un fluide de freinage en vue de l'obtention d'un frottement visqueux, **caractérisée en ce que** l'élément d'amortissement comporte un corps de roulement (33 ; 50) disposé coaxialement au corps de révolution (30), corps de roulement qui, en vue de son freinage, est soumis, à l'intérieur de l'élément formant enveloppe de charnière (6 ; 41), au frottement visqueux produit par le fluide de freinage et qui est accouplé à l'axe de charnière (31, 48) par l'intermédiaire d'un élément formant roue libre (32), lequel autorise par rapport au corps de roulement (33), des mouvements (27) de l'axe de charnière (31, 48) dans le sens du relèvement, non amorti, du couvercle de clavier (2).

2. Pièce (4 ; 40) à montée côté bâti, selon la revendication 1, **caractérisée en ce que** l'élément d'amortissement présente, entre la pièce formant enveloppe de charnière (6 ; 41) et le corps de roulement (33 ; 50) situé à l'intérieur de celle-ci, une fente (34) remplie du fluide de freinage, dans laquelle le corps de roulement (33 ; 50) et, le cas échéant, le corps de révolution (30 ; 45, 46) sont freinés par le frottement visqueux, une position angulaire non limitée étant alors admise.

3. Pièce (4 ; 40) à montée côté bâti, selon la revendication 1 ou 2, **caractérisée par** un ou plusieurs éléments élastiques (35 ; 56) entre la pièce formant enveloppe de charnière (6 ; 41) et le corps de roulement (33 ; 50) situé à l'intérieur de celle-ci, pour produire une action de freinage par frottement.

4. Pièce (4 ; 40) à montée côté bâti, selon les revendications 2 et 3, **caractérisée en ce que** l'élément élastique (35 ; 56) est réalisé sous forme d'un anneau ou d'un anneau torique s'étendant dans la fente (34).

5. Pièce (4 ; 40) à montée côté bâti, selon la revendication 4, **caractérisée en ce que** l'anneau élastique (35 ; 56) est monté encerclant le corps de roulement (33 ; 50).

6. Pièce (4 ; 40) à montée côté bâti, selon la revendication 4 ou 5, **caractérisée en ce que** l'anneau élastique (35 ; 56) est reçu dans un évidement ou une gorge (55) du corps de roulement (50), qui s'étend sur toute la circonférence de ce dernier.

7. Pièce (4 ; 40) à montée côté bâti, selon la revendication 6, **caractérisée en ce que** l'évidement ou la gorge (55) présente des surfaces de délimitation sensiblement perpendiculaires à l'axe de charnière (31 ; 48), qui sont ajustables l'une par rapport à l'autre afin d'accroître une force de compression pour l'anneau (56) ou l'anneau torique.

8. Pièce (4 ; 40) à montée côté bâti, selon la revendication 7, **caractérisée par** un disque de compression (51), qui définit une surface de délimitation de l'évidement ou de la gorge (55) pour l'anneau (56) et qui est fixé immobile en rotation, mais déplaçable suivant la direction de l'axe de charnière (48), sur le corps de roulement (50), lequel définit la surface de délimitation opposée de l'évidement ou de la gorge (55).

9. Pièce (4 ; 40) à montée côté bâti, selon la revendication 8, **caractérisée par** une vis centrale (59) qui, par sa tige, traverse le corps de roulement (50) et/ou une rondelle (60), bloquée dans ce dernier, et est vissée dans une forure (62), pourvue d'un filetage, du disque de compression (51).
